# EUROPÄISCHE PATENTSCHRIFT

(11) **EP 1 634 696 B1**
(45) Veröffentlichungstag und Bekanntmachung des Hinweises auf die Patenterteilung: **04.07.2007**
(21) Anmeldenummer: 05108249.3
(22) Anmeldetag: 08.09.2005
(51) Int. Cl.: B32B 21/08, B32B 9/04, E04F 15/10

(54) **Bodenbelagelement**
Floor covering element
Elément pour revêtement de sol

(30) Priorität: 09.09.2004 DE 202004014160
(43) Veröffentlichungstag der Anmeldung: 15.03.2006
(73) Patentinhaber: Mohr, Wolfgang, D-64720 Michelstadt (DE); Rosenberger, Johann, 97789 Oberleichtersbach (DE)
(72) Erfinder: Mohr, Wolfgang, D-64720 Michelstadt (DE); Rosenberger, Johann, 97789 Oberleichtersbach (DE)
(74) Vertreter: Kewitz, Ansgar

(56) Entgegenhaltungen:
- EP-A- 0 692 423
- EP-A- 1 120 242
- DE-A1- 10 201 087
- DE-U1- 29 501 070
- US-A- 6 103 333
- DATABASE WPI Section PQ, Week 199747 Derwent Publications Ltd., London, GB; Class Q45, AN 1997-509737 XP002358116 & JP 09 242313 A (UCHIYAMA KOGYO KK) 16. September 1997 (1997-09-16)

## Beschreibung

### Gebiet der Erfindung

Die Erfindung betrifft einen Bodenbelag aus mehreren Schichten, umfassend eine Trägerplatte und eine sich oberhalb der Trägerplatte befindende Nutzschicht.

### Hintergrund der Erfindung

Hartfußbödenbeläge können wahlweise durch Kleben oder sonstiges Fixieren fest mit dem Untergrund verbunden oder schwimmend verlegt werden. Bei schwimmend verlegten harten Bodenbelägen, wie Laminatböden, besteht der Nachteil, dass dieser beim Betreten oder Belasten nachgibt und die umgebende Luft in hörbare Schwingungen versetzt. Die dabei auftretenden Schallgeräusche sind zum einen der so genannte Trittschall, der beim Begehen eines Bodenbelages in die darunter liegende Räume gelangt, und der so genannte Gehschall, also die nach oben in den Raum abstrahlende Resonanz.

Aus dem Stand der Technik sind Laminat-Bodenbeläge bekannt. Grundsätzlich ist ein Laminat eine Platte, die aus einer Trägerplatte, einer Verschleißschicht (Schutzschicht), einer Gegenzugschicht und einer meist mit Holzdekoren bedruckten Dekorschicht besteht. Die Gegenzugschicht verhindert, dass sich die Platte verzieht, die Verschleißschicht - auch Overlay genannt -, meist eine Melaminharzoberfläche, verhindert, dass die Dekorschicht beschädigt wird. Umgangssprachlich wird aber unter Laminat ein Fußbodenbelag verstanden, der häufig als Ersatz für das teurere Parkett eingesetzt wird. Laminatböden zeichnen sich durch eine hohe Beanspruchbarkeit aus, die in verschiedenen Beanspruchungsklassen klassifiziert ist. Heutzutage werden fast nur noch Laminatböden hergestellt, die eine leimlose Verlegung zulassen, meistens in Form von Klicklaminat, bei dem ein Paneel in das andere einrastet.

Die Laminat-Faserplatten werden aus Holzfasern oder anderen Lignocellulose-Werkstoffen geformt, die durch mechanisches Schleifen des Rohmaterials erzielt werden. Das Verfahren wird bei einer hohen Temperatur in einer mit Druck beaufschlagten Dampfumgebung durchgeführt.

Gerade bei dem zuvor beschrieben Laminatboden wird das Begehgeräusch, das sich in Form von Trittschall und Gehschall bemerkbar macht, als unangenehm empfunden (Trommeleffekt). Aus diesem Grund werden die verschiedensten Unterlagsplatten/-bahnen zur Reduzierung dieses Schalls eingesetzt. Im Einzelnen handelt es sich dabei beispielsweise um Holzfaserdämmplatten, Gummimatten, Gummikorkgranulatplatten, Polyethylenschaumbahnen, Polyurethanbahnen usw. All diese Unterlagsmatten/-bahnen reduzieren zwar den Trittschall, d.h. denjenigen Schall, der beim Begehen durch die Decke in die darunter liegenden Räume dringt, aber nur in einem sehr geringen Maße den Gehschall der von dem Bodenbelag zurück in den Raum gestrahlt wird und sich dort als unangenehm empfundener Begehschall bemerkbar macht.

Teilweise werden die Laminatböden auch mit Dämmplatten/-bahnen auf der Rückseite beklebt. Dies führt aber ebenfalls zu keiner signifikanten Schallreduzierung im Raum. Außerdem führen die Verbundelemente bei der Entsorgung zu erheblichen Problemen. Als eine andere Methode wird sehr häufig auch eine Verklebung des Laminatfussbodens auf dem Untergrund durchgeführt, was allerdings aus den verschiedensten Gründen als nicht unproblematisch anzusehen ist. Man kann bei dieser Art des Schallschutzes beispielsweise Verlegefehler nur sehr schwer oder gar nicht korrigieren, ohne den Belag vollständig aus dem Raum zu entfernen. Allerdings wird dabei der Gehschall kaum unterdrückt.

DE 7236239 U offenbart eine Dekorationsplatte aus einer Schaumstoffschicht aus Kunststoff und einer die Sichtfläche bildenden Außenschicht, die auch aus Kork bestehen kann.

DE 43 32 845 A1 offenbart ein schallabsorbierendes Deckenelement, mit einer gelochten Metallplatte, die mit einer schallschluckenden Beschichtung versehen ist, die aus einer geschäumten Kunststoff-Folie bestehen kann.

DE 198 51 656 A1 offenbart eine Fußbodendiele, mit der der Trittschall gedämpft werden soll. Auf der Unterseite des Fußbodenbelags ist zur Raum- bzw. Trittschalldämmung eine Schalldämpfungsplatte angeordnet. Die Schalldämpfungsplatte kann ein Verbundwerkstoff aus durch Polyurethan gebundenen Gummigranulaten oder Kork- und Gummigranulaten sein. Diese Druckschrift offenbart kein Bodenbelagselement mit einer sich auf einer Trägerplatte befindenden Nutzschicht, die eine Polymerfolie umfasst.

DE 203 11 569 U1 offenbart ein Fußbodenlaminat mit einer Trägerplatte mit einer sich darüber befindenden Nutzschicht, wobei zwischen der Trägerplatte und der Nutzschicht eine Dekorschicht angeordnet ist. Die Trägerplatte kann dabei eine HDF-Platte sein. Die Verwendung einer MDF-Platte ist nicht offenbart. Die Nutzschicht kann aus einem strahlengehärteten Polyester bestehen.

DE 86 18 554 U1 offenbart ein Bodenbelagelement ein Belagelement, welches aus einer Trägerplatte aus Holz mit einer sich darauf befindenden Kunststofffolie, die beispielsweise aus Polyethylen besteht, aufgebaut ist. Die Folie kann dabei transparent sein. Mit diesem Aufbau lassen sich jedoch nicht ausreichende Schalleigenschaften erzielen.

EP 1 262 607 A1 offenbart eine Fußbodenplatte aus einer Trägerplatte aus einem Holzwerkstoff, wie beispielsweise MDF oder HDF, einer darauf angeordneten Dekorschicht und einer Nutzschicht. Die Nutzschicht kann dabei eine Polyesterfolie sein und kann transparent sein, sodass die Dekorschicht sichtbar bleibt.

In dieser Druckschrift wird nicht zwischen Trittschall und Gehschall im Sinne dieser Anmeldung unterschieden. Die Trittschalldämmung erfolgt über eine Polyurethan-Beschichtung, die auf der Rückseite der Dekorschicht aufgebracht ist, beispielsweise aufgestrichen oder als Folie aufgeklebt. Dieser Aufbau ist vergleichsweise aufwändig und kostspielig. Mit ihm lassen sich dennoch nur unzureichende Schalleigenschaften erzielen.

US 6,103,333 offenbart eine Bodenschutzmatte, die eine mit einem Kunststoff imprägnierte Unterschicht, eine mittlere Schicht aus PVC und obere Schicht aus einem Holzfurnier umfasst, die zu einem Verbund laminiert sind. Die bei Gebrauch der Bodenschutzmatte auftretenden Belastungen sind vergleichbar zu denen vergleichbarer Bodenbelagelemente im Sinne der vorliegenden Anmeldung. Um der Bodenschutzmatte eine ausreichende Stabilität zu verleihen, insbesondere ein Einbeulen der oberen Schicht zu verhindern, ist die Schicht aus PVC im Wesentlichen nicht komprimierbar.

DE 295 01 070 U1 offenbart eine tragbare Tanzplatte für Flamencotanz, die wenig Lärm erzeugen soll und wenig schwingen soll. Zu diesem Zweck ist die Deckschicht aus einem professionellen Tanzteppich oder aus einem Gummi ausgebildet. Unter der Deckschicht ist ein Filz mit einer PVC-Unterlage vorgesehen.

JP-A-4131461 offenbart einen Bodenbelag mit Schalldämmung, der eine obere Nutzschicht in Holzdekor und eine untere Platte aufweist, zwischen denen sich eine Lage aus einem geschäumten Kunststoff befindet. Auf der Rückseite der unteren Platte befindet sich zur Schalldämmung eine gewellte Struktur, was für eine gewisse Elastizität sorgt. In der Rückseite sind Nuten vorgesehen.

JP-A-2115452 offenbart ein Bodenbelagelement mit Schalldämmung, der aus insgesamt vier Schichten besteht. Zuoberst ist eine Holz-Nutzschicht vorgesehen, unter der eine Lage aus einem geschäumten Vinylchlorid mit einer Mehrzahl von zueinander beabstandeten Nuten vorgesehen ist, die sich über die gesamte Breite bzw. Länge des Bodenbelagelements erstrecken. Diese Struktur ist auf einer Trägerplatte angeordnet, unterhalb von der sich eine weitere Lage aus einem geschäumten Vinylchlorid, die entsprechend der ersten Lage aus einem geschäumten Vinylchlorid aufgebaut ist. Auf die Unterseite ist ein Gewebe laminiert.

### Zusammenfassung der Erfindung

Aufgabe der vorliegenden Erfindung war es, einen leicht verlegbaren Bodenbelag mit verbesserten Schalleigenschaften bereitzustellen.

Gemäß der vorliegenden Erfindung wird die Aufgabe durch ein Bodenbelagelement aus mehreren Schichten gelöst, mit einer Trägerplatte und einer sich oberhalb der Trägerplatte befindenden Nutzschicht, wobei die Trägerplatte einen druckfesten Holzwerkstoff und die Nutzschicht geschäumtes Polyvinylchlorid (cushion vinyl) mit heterogenem Aufbau enthält.

Gemäß einer weiteren bevorzugten Ausführungsform kann bei einem solchen Bodenbelagelement zwischen der Trägerplatte und der Nutzschicht eine Korkschicht vorgesehen sein. Dabei kann auf der Unterseite der Trägerplatte zusätzlich eine weitere Korkschicht vorgesehen sein. Eine solche Korkschicht ist bevorzugt aus einer gepressten oder gebundenen Korkgranulatschicht ausgebildet.

Überaschenderweise wurde festgestellt, dass durch den Gegenstand der Erfindung eine wesentliche Verringerung von Trittschall, Raumschall, Körperschall und insbesondere von Gehschall, einhergehend mit einem angenehmen Hörempfinden erreicht wird. Zugleich werden die von Schritten ausgehenden Energiestöße abgefedert, der Gehkomfort steigt deutlich an.

Ferner können alle erfindungsgemäßen Bodenbelagelemente lichtechte Oberflächen aufweisen. Ein Verblassen der Dekore ist somit ausgeschlossen und die Neuplatzierung von Teppichen jederzeit erlaubt. Ferner können hohe Stoßfestigkeit und hohe Abriebwerte erreicht werden. Gerade die beiden alternativen Nutzschichten des erfindungsgemäßen Bodenbelagelements beeinflussen maßgeblich die Qualität des Bodenbelags. Formstabilität, Druck- und Stoßunempfindlichkeit sowie Pflegeleichtigkeit sind das Resultat.

Erfindungsgemäß wird als druckfester Holzwerkstoff für die Trägerplatte eine Faserplatte von mittlerer Dichte (auf diesem Gebiet als MDF oder mitteldichte Faserplatte bekannt) oder eine Faserplatte hoher Dichte (auf diesem Gebiet als HDF oder hochverdichtete Faserplatte bekannt) verwendet. MDF- oder HDF-Platten zeichnen sich durch niedrige Hestellungskosten bei gleichzeitig hoher Belastbarkeit und sehr guter Verarbeitbarkeit aus. MDF- oder HDF-Faserplatten werden beispielsweise unter trockenen Bedingungen geformt, wobei die Fasern vor dem Bilden der so genannten Matratze getrocknet werden, die anschließend gepresst und mit Wärme härtenden Harzen bei fehlendem Wasser und verringertem Druck behandelt wird. Aufgrund ihrer Konsistenz können Verbindungselemente, beispielsweise Nut-FederVerbindungen, stirnseitig und/oder längsseitig in einfacher und dauerhafter Weise ausgebildet werden.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösenden Aufgaben ergeben werden und worin:
- Fig. 1a: in einem Querschnitt ein Bodenbelagelement gemäß einer Ausführungsform zeigt, die einem besseren Verständnis der vorliegenden Erfindung dienen soll;
- Fig. 1b: in einem Querschnitt ein Bodenbelagelement gemäß einer Ausführungsform zeigt, die einem besseren Verständnis der vorliegenden Erfindung dienen soll;
- Fig. 2: in einem Querschnitt ein Bodenbelagelement gemäß einer weiteren Ausführungsform zeigt;
- Fig. 3a: in einem Querschnitt ein Bodenbelagelement gemäß einer weiteren Ausführungsform der vorliegenden Erfindung zeigt; und
- Fig. 3b: in einem Querschnitt ein Bodenbelagelement gemäß einer weiteren Ausführungsform zeigt, die einem besseren Verständnis der vorliegenden Erfindung dienen soll.

In den Figuren bezeichnen identische Bezugszeichen identische oder gleichwirkende Elemente oder Elementgruppen.

### Ausführliche Beschreibung von bevorzugten Ausführungsbeispielen

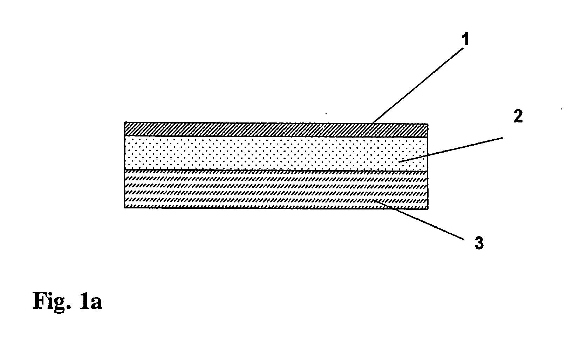

Fig. 1a zeigt eine Ausführungsform eines Bodenbelags, die einem besseren Verständnis der vorliegenden Erfindung dient, wobei auf der Oberfläche der Trägerplatte 2 eine Nutzschicht 1 mit Polymerfolie aufgebracht ist. Auf der Unterseite der Trägerplatte 2 befindet sich eine Korkschicht 3.

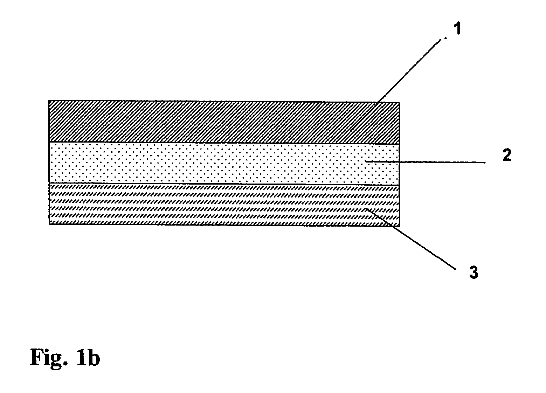

Fig. 1b zeigt eine Ausführungsform des erfindungsgemäßen Bodenbelags, wobei auf der Oberfläche der Trägerplatte 2 eine Nutzschicht 1 aus geschäumtem Polyvinylchlorid mit heterogenem Aufbau (cushion vinyl) aufgebracht ist. Auf der Unterseite der Trägerplatte 2 befindet sich eine Korkschicht 3.

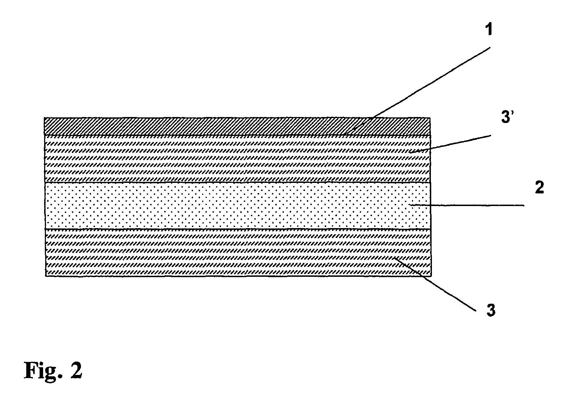

Fig. 2 zeigt eine weitere Ausführungsform eines Bodenbelags, die einem besseren Verständnis der vorliegenden Erfindung dient, wobei auf der Oberfläche der Trägerplatte 2 eine Korkschicht 3' aufgebracht ist. Auf der Oberfläche der Korkschicht 3' ist eine Nutzschicht mit Polymerfolie mit heterogenem Aufbau aufgebracht. Auf der Unterseite der Trägerplatte 2 befindet sich eine Korkschicht 3.

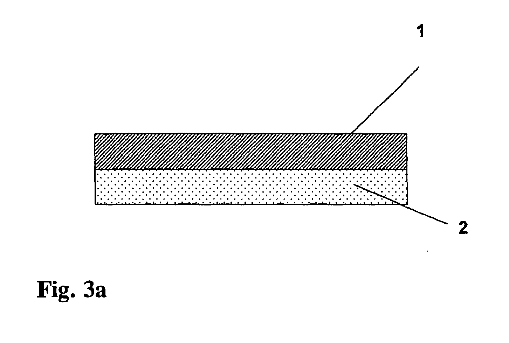

Fig. 3a zeigt eine weitere Ausführungsform des erfindungsgemäßen Bodenbelags, wobei auf der Oberfläche der Trägerplatte 2 eine Nutzschicht 1 aus geschäumtem Polyvinylchlorid mit heterogenem Aufbau (cushion vinyl) aufgebracht ist.

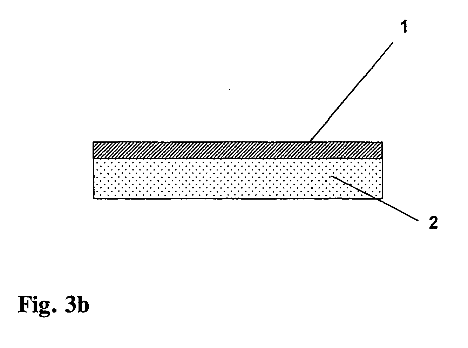

Fig. 3b zeigt eine weitere Ausführungsform eines Bodenbelags, die einem besseren Verständnis der vorliegenden Erfindung dient, wobei auf der Oberfläche der Trägerplatte 2 eine Nutzschicht 1 aus Polymerfolie aufgebracht ist.

Der erfindungsgemäße Bodenbelag umfasst somit mehrere Schichten. Dabei handelt es sich bei einer Schicht um eine Trägerschicht (Trägerplatte). Diese Trägeplatte kann aus druckfestem Holzwerkstoff bestehen, beispielsweise als mitteldichte (MDF) oder hochdichte bzw. hochverdichtete (HDF) Faserplatte ausgebildet sein. Die Schichtdicke der Trägerplatte beträgt vorzugsweise 5,0 bis 8,0 mm. Für die passgenaue Verbindung der Bodenbeläge kann die Trägerplatte ferner eine Profilierung aufweisen, beispielsweise überstehende Kanten oder Kanten für eine Nut-Feder-Verbindung. Dies erlaubt eine leichte Verlegung und eine stabile Verbindung. Diese Profilierungen sind stirnseitig und/oder längsseitig vorgesehen.

Oberhalb der Trägerplatte ist eine Nutzschicht vorgesehen. Die Nutzschicht kann dabei eine Dekorschicht enthalten. In einer Ausführungsform umfasst die Nutzschicht eine Polymerfolie, beispielsweise aus Polyvinylchlorid, Polyester, Polyethylen, Polyurethan oder Polyolefin oder einem Gemisch dieser Polymere.

Erfindungsgemäß umfasst der Bodenbelag eine Nutzschicht, die geschäumtes Polyvinylchlorid mit heterogenem Aufbau (cushion vinyl) enthält. Geschäumtes Polyvinylchlorid, auch cushion vinyl genannt, umfasst einen geschäumten Kern, der zwischen zwei oder mehr Vinyl-Lagen angeordnet ist. Durch den geschäumten Kern lässt sich eine weitere Schalldämpfung erzielen. Das geschäumte Polyvinylchlorid kann geeignet eingefärbt oder bedruckt sein.

Die Polymerfolie kann eine bedruckte oder transparente Polymerfolie sein. In einer besonderen Ausführungsform des erfindungsgemäßen Bodenbelags kann die transparente Polymerfolie auf der Rückseite bedruckt sein. Die eine Polymerfolie enthaltende Nutzschicht weist vorzugsweise eine Schichtdicke von 0,15 bis 0,70 mm auf. Die ein geschäumtes Polyvinylchlorid enthaltende Nutzschicht weist vorzugsweise eine Schichtdicke von 2,0 bis 3,5 mm auf.

Gemäß einer weiteren Ausführungsform ist die Nutzschicht ein Sandwich aus einer bedruckten Polymerfolie und einer transparenten Polymerfolie. Ein solcher Materialverbund kann in einfacher Weise geeignet vorgefertigt, beispielsweise in Entsprechung zu den individuellen Anforderungen an das Bodenbelagelement, und dann mit der Trägerplatte geeignet verbunden werden.

Eine Ausführungsform des erfindungsgemäßen Bodenbelags weist unterhalb der Trägerplatte eine zusätzliche Korkschicht auf. Ferner kann sich in einer weiteren Ausführungsform des erfindungsgemäßen Bodenbelags zwischen Trägerplatte und Nutzschicht eine weitere Korkschicht befinden. Die Korkschichten können dabei aus einer gebundenen oder gepressten Korkgranulatschicht bestehen.

Die Korkschichten weisen vorzugsweise jeweils eine Schichtdicke von 1,0 bis 3,0 mm auf.

Wie dem Fachmann ohne weiteres ersichtlich sein wird, können die in den Figuren dargestellten Bodenbelagelemente in geeigneter, aus dem Stand der Technik bekannter Weise zu Bodenbelägen zusammengefügt werden. Aufgrund der niedrigen Herstellungskosten können Bodenbelagelemente mit einer MDF-Trägerplatte beispielsweise bevorzugt für den privaten Einsatz vorgesehen, während Bodenbelagelemente mit den festeren und belastbaren HDF-Trägerplatten bevorzugt beispielsweise für den Einsatz im gewerblichen Bereich eingesetzt werden können.

## Patentansprüche

1. Bodenbelagelement aus mehreren Schichten, umfassend eine Trägerplatte (2) und eine sich oberhalb der Trägerplatte befindende Nutzschicht (1), wobei die Trägerplatte (2) einen druckfesten Holzwerkstoff und die Nutzschicht (1) geschäumtes Polyvinylchlorid mit heterogenem Aufbau (cushion vinyl) enthält, das einen geschäumten Kern umfasst, der zwischen zwei oder mehr Vinyl-Lagen angeordnet ist.

2. Bodenbelagelement nach Anspruch 1, wobei das geschäumte Polyvinylchlorid eine Schichtdicke von 2,0 bis 3,5 mm aufweist.

3. Bodenbelagelement nach Anspruch 1 oder 2, wobei sich unterhalb der Trägerplatte eine Korkschicht (3) befindet.

4. Bodenbelagelement nach Anspruch 3, wobei die Korkschicht (3) eine Korkgranulatschicht ist.

5. Bodenbelagelement nach Anspruch 3 oder 4, wobei die Korkschicht (3) eine Schichtdicke von 1,0 bis 3,0 mm aufweist.

6. Bodenbelagelement nach einem der vorhergehenden Ansprüche, wobei der druckfeste Holzwerkstoff eine mitteldichte Faserplatte (MDF) oder eine hochdichte bzw. hochverdichtete Faserplatte (HDF) ist.

7. Bodenbelagelement nach einem der vorhergehenden Ansprüche, wobei die Trägerplatte (2) eine Schichtdicke von 5,0 bis 8,0 mm aufweist.

8. Bodenbelagelement nach einem der vorhergehenden Ansprüche, wobei die Nutzschicht (1) eine Dekorschicht enthält.

9. Bodenbelagelement nach einem der vorhergehenden Ansprüche, wobei zwischen der Trägerplatte (2) und der Nutzschicht (1) eine Korkschicht vorgesehen ist.

## Claims

1. A flooring element having several layers, comprising a core layer (2) and a wear layer (1) which is disposed above the core layer, said core layer (2) containing a pressure-resistant wood material and said wear layer (1) containing foamed polyvinyl chloride having heterogeneous structure (cushion vinyl), which comprises a foamed core, which is arranged between two or more vinyl plies.

2. The flooring element according claim 1, wherein the foamed polyvinyl chloride has a layer thickness of between 2.0 and 3.5 mm.

3. The flooring element according to claim 1 or 2, wherein a cork layer (3) is disposed below the core layer.

4. The flooring element according to claim 3, wherein the cork layer (3) is a cork granulate layer.

5. The flooring element according to claim 3 or 4, wherein the cork layer (3) has a layer thickness of between 1.0 and 3.0 mm.

6. The flooring element according to any of the preceding claims, wherein the pressure-resistant wood material is a medium density fibre board (MDF) or a high density fibre board (HDF).

7. The flooring element according to any of the preceding claims, wherein the core layer (2) has a layer thickness of between 5.0 and 8.0 mm.

8. The flooring element according to any of the preceding claims, wherein the wear layer (1) contains a decorative layer.

9. The flooring element according to any of the preceding claims, wherein a cork layer is provided between said core layer (2) and said wear layer (1).

## Revendications

1. Elément de revêtement de sol constitué de plusieurs couches, comprenant une plaque de support (2) et une couche d'usage (1) se trouvant au dessus de la plaque de support, dans lequel la plaque de support (2) contient un matériau en bois résistant à la pression et la couche d'usage (1) contient du chlorure de polyvinyle expansé présentant une structure hétérogène (cushion vinyl) contenant un noyau expansé qui est disposé entre deux ou plusieurs couches de vinyle.

2. Elément de revêtement de sol selon la revendication 1, dans lequel le chlorure de polyvinyle expansé présente une épaisseur de couche de 2,0 à 3,5 mm.

3. Elément de revêtement de sol selon la revendication 1 ou 2, dans lequel au dessous de la plaque de support se trouve une couche de liège (3).

4. Elément de revêtement de sol selon la revendication 3, dans lequel la couche de liège (3) est une couche de granulés de liège.

5. Elément de revêtement de sol selon la revendication 3 ou 4, dans lequel la couche de liège (3) présente une épaisseur de couche de 1,0 à 3,0 mm.

6. Elément de revêtement de sol selon l'une quelconque des revendications précédentes, dans lequel le matériau en bois résistant à la pression est un panneau de fibres de moyenne densité (MDF) ou un panneau de fibres de haute densité ou à haute compression (HDF).

7. Elément de revêtement de sol selon l'une quelconque des revendications précédentes, dans lequel la plaque de support (2) présente une épaisseur de couche de 5,0 à 8,0 mm.

8. Elément de revêtement de sol selon l'une quelconque des revendications précédentes, dans lequel la couche d'usage (1) est une couche décorative.

9. Elément de revêtement de sol selon l'une quelconque des revendications précédentes, dans lequel entre la plaque de support (2) et la couche d'usage (1) est prévue une couche de liège.
